# EUROPÄISCHE PATENTSCHRIFT

(11) **EP 1 279 008 B1**
(45) Veröffentlichungstag und Bekanntmachung des Hinweises auf die Patenterteilung: **10.08.2005**
(21) Anmeldenummer: 01921723.1
(22) Anmeldetag: 23.04.2001
(51) Int. Cl.: G01F 1/684

(54) **FLUSSSENSOR FÜR FLÜSSIGKEITEN**
FLOW SENSOR
DETECTEUR DE DEBIT POUR FLUIDES

(30) Priorität: 04.05.2000 CH 871002000; 13.06.2000 CH 116000
(43) Veröffentlichungstag der Anmeldung: 29.01.2003
(73) Patentinhaber: Sensirion AG, 8052 Zürich (CH)
(72) Erfinder: MAYER, Felix, CH-8057 Zürich (CH); HORNUNG, Mark, Rainer, CH-8049 Zürich (CH); STEINER VANHA, Ralph, CH-8006 Zürich (CH)
(74) Vertreter: Blum, Rudolf Emil Ernst
(86) Internationale Anmeldenummer: PCT/IB2001/000667
(87) Internationale Veröffentlichungsnummer: WO 2001/084087

(56) Entgegenhaltungen:
- DE-A- 3 006 584
- DE-A- 19 511 687
- GB-A- 1 035 324
- US-A- 4 680 963
- US-A- 5 081 866
- US-A- 5 398 549
- US-A- 5 830 372

## Beschreibung

Die Erfindung betrifft einen Flusssensor für eine Flüssigkeit gemäss Oberbegriff von Anspruch 1 sowie ein Verfahren zu dessen Herstellung.

### Stand der Technik

Es ist bekannt, die Flussgeschwindigkeit bzw. den Massenfluss einer Flüssigkeit mit einem Halbleiterbaustein zu messen, auf welchem eine Wärmequelle und mindestens ein Temperatursensor angeordnet sind. Der Fluss führt zu einer Änderung der Temperaturverteilung der Wärmequelle, welche über den Temperatursensor bzw. die Temperatursensoren gemessen werden kann.

Halbleiterbausteine dieser Art sind jedoch empfindlich. Im Kontakt mit Flüssigkeiten kommt es leicht zu unerwünschter Diffusion von Stoffen, die die Eigenschaften des Bausteins beeinflussen. Ausserdem kann mechanische Beanspruchung das Bauteil beschädigen. Deshalb müssen die Halbleiterbausteine in aufwendiger Weise z.B. durch Schutzschichten geschützt werden.

### Darstellung der Erfindung

Es stellt sich deshalb die Aufgabe, einen Flusssensor der eingangs genannten Art bereitzustellen, der eine Vielzahl von verschiedensten Flüssigkeiten messen kann, robust ist und in einfacher Weise hergestellt werden kann.

Diese Aufgabe wird vom Flusssensor gemäss Anspruch 1 erfüllt.

Erfindungsgemäss wird der Halbleiterbaustein also an der Aussenseite eines Rohrstücks angeordnet, und zwar derart, dass er mit dieser Aussenseite in thermischem Kontakt steht. Überraschenderweise zeigt es sich, dass eine derartige Anordnung immer noch genaue und empfindliche Messungen erlaubt. Da die Flüssigkeit im Rohrstück geführt wird und nicht mit dem Halbleiterbaustein bzw. mit dessen Passivierungsschichten in Kontakt kommt, können Schäden vermieden werden.

Der Halbleiterbaustein kann z.B. in direktem thermischen Kontakt mit der Rohraussenseite stehen, oder er kann mit dieser über Wärmeleitelemente, z.B. aus Metall, verbunden sein. Zwischen dem Rohrstück und dem Halbleiterbaustein kann auch eine adhäsive Schicht angeordnet werden, z.B. aus einem Lot, oder es kann Wärmeleitpaste verwendet werden.

Das Rohrstück kann z.B. aus Glas oder Metall sein, wobei Metall wegen seiner hohen Wärmeleitfähigkeit bevorzugt wird. Andere Materialien, wie z.B. Kunststoff, sind jedoch auch denkbar.

Das Rohrstück kann einteilig sein oder aus mehreren einzelnen Rohrstücken bestehen.

Um einen besseren Wärmekontakt zu gewährleisten, kann die Aussenseite des Rohrs im Bereich des Halbleiterbausteins abgeflacht ausgestaltet werden und/oder das Rohr weist einen verdünnten Wandbereich auf.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Schnitt durch eine erste Ausführung des Flusssensors,
Fig. 2 einen Schnitt entlang Linie II-II von Fig. 1,
Fig. 3 eine Draufsicht auf den Halbleiterbaustein des Flusssensors,
Fig. 4 eine Seitenansicht eines Flusssensors mit Wärmeleitelementen,
Fig. 5 einen Schnitt durch eine dritte Ausführung des Flusssensors,
Fig. 6 einen Schnitt entlang Linie VI-VI von Fig. 5,
Fig. 7 einen Schnitt durch eine vierte Ausführung des Flusssensors,
Fig. 8 einen Schnitt durch eine fünfte Ausführung des Flusssensors,
Fig. 9 einen Schnitt durch eine sechste Ausführung des Flussensors und
Fig. 10 eine Draufsicht auf eine zweite Ausführung des Halbleiterbausteins.

### Wege zur Ausführung der Erfindung

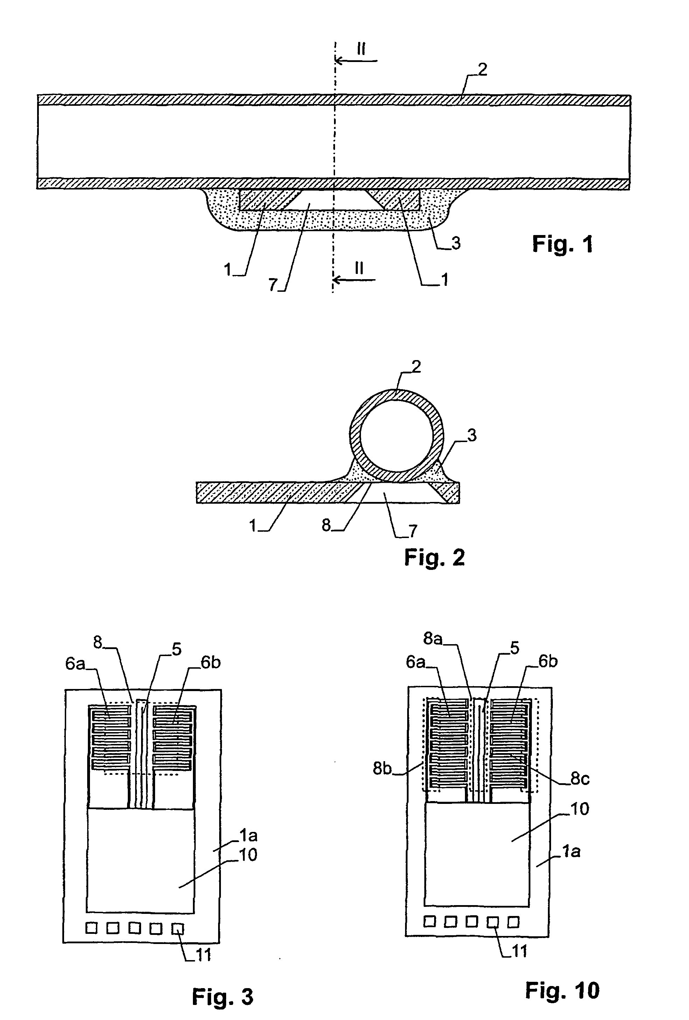

Der Grundaufbau des Flusssensors ergibt sich aus dem in Fig. 1 - 3 dargestellten ersten Ausführungsbeispiel. Er besteht aus einem Halbleiterbaustein 1, der an der Aussenseite eines Rohrstücks 2 angeordnet ist, durch welches die zu messende Flüssigkeit strömt. Zur Fixierung des Halbleiterbausteins 1 am Rohrstück 2 ist in dieser Ausführung eine ausgehärtete Klebemasse 3 vorgesehen.

Wie insbesondere aus Fig. 3 ersichtlich, besteht der Halbleiterbaustein 1 aus einem Substrat 1a, auf welchem eine Wärmequelle 5 in Form eines integrierten Widerstands angeordnet ist. In Flussrichtung der Flüssigkeit vor und hinter der Wärmequelle 5 sind zwei Temperatursensoren 6a, 6b vorgesehen. In der vorliegenden bevorzugten Ausführung sind die Temperatursensoren als Thermosäulen ausgestaltet.

Im Substrat 4 ist eine Öffnung 7 ausgeätzt, die von einer dünnen dielektrischen Membran 8 überdeckt ist. Die Wärmequelle 5 sowie die wärmequellen-seitigen Kontaktreihen der Thermosäulen 6a, 6b sind auf der Membran 8 angeordnet. Durch diese Anordnung wird die Wärmeleitung zwischen der Wärmequelle 5 und den Temperatursensoren reduziert.

Die Wärmequelle 5 und die Thermosäulen 6a, 6b sind auf ihrer Oberseite mit einer dielektrischen Passivierungsschicht (nicht gezeigt) z.B. aus Siliziumoxid oder Siliziumnitrid versehen.

Die Wärmequelle 5 und zumindest die inneren Kontaktreihen der Thermosäulen 6a, 6b bzw. deren Passivierungsschicht stehen in thermischem Kontakt mit der Aussenseite des Rohrs 2. Sie können die Aussenseite des Rohrs direkt berühren oder von dieser durch eine dünne Schicht aus adhäsivem Material, Wärmeleitpaste oder Lot getrennt sein.

Auf dem Substrat 4 ist ferner eine Auswerteelektronik 10 angeordnet. Diese umfasst z.B. einen Vorverstärker, einen Analog-Digital-Wandler und eine digitale Verarbeitungsstufe, z.B. um das Signal der Thermosäulen zu linearisieren und zu skalieren, sowie die Ansteuerung für die Wärmequelle. Zur elektrischen Verbindung mit der Aussenwelt sind Anschlusspads 11 vorgesehen.

Die Auswerteelektronik 10 ist ausgestaltet, um die Wärmequelle 5 mit konstantem Strom, konstanter Temperatur oder konstanter Spannung zu betreiben. Ferner misst sie den Unterschied Δ der Temperaturdifferenzen über den Thermosäulen 6a, 6b. Da die äusseren Kontaktreihen der Thermosäulen 6a, 6b im wesentlichen auf gleicher Temperatur liegen, entspricht der Unterschied Δ im wesentlichen dem Temperaturunterschied an den inneren Kontaktreihen.

Im Betrieb erzeugt die Wärmequelle 5 eine Temperaturverteilung in der Wand des Rohrs 2. Durch den Fluss der Flüssigkeit im Rohr 2 wird diese Temperaturverteilung asymmetrisch, so dass der Unterschied Δ der Temperaturdifferenzen ein Mass für die Flussgeschwindigkeit ist.

Das Rohrstück 2 ist unabhängig vom Halbleiterbaustein 1 gefertigt und selbsttragend. Es besteht vorzugsweise aus Metall und besitzt eine Wandstärke von möglichst weniger als 0.5 mm, so dass eine gute Empfindlichkeit erreicht wird. Es zeigt sich jedoch, dass dank der hohen Sensitivität des Halbleiterbausteins auch Rohrstücke mit dickeren Wandungen verwendet werden können.

Es können auch Rohre aus Glas oder Kunststoff verwendet werden.

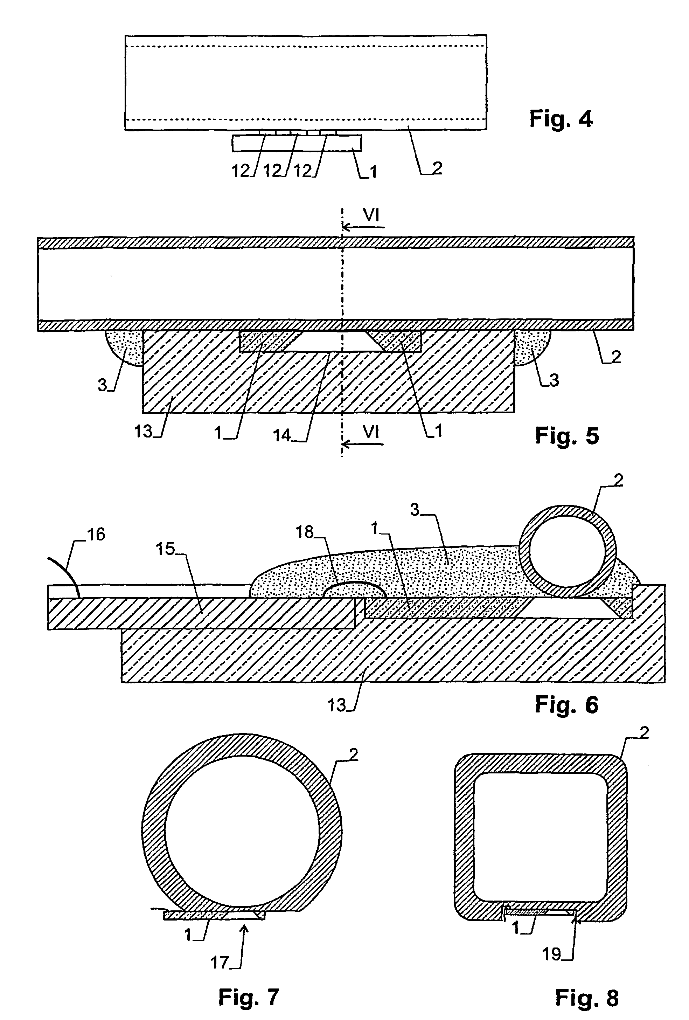

Eine zweite Ausführung der Erfindung wird in Fig. 4 dargestellt. Hier liegt der Halbleiterbaustein 1 nicht direkt an der Aussenseite des Rohrstücks 2 auf. Vielmehr sind zwischen dem Halbleiterbaustein 1 und dem Rohr 2 drei Wärmeleitelemente 12 angeordnet. Dabei kann es sich z.B. "Metallbumps" handeln, d.h. um Erhebungen aus Metall, vorzugsweise aus Gold oder Kupfer, die je über den inneren Kontaktreihen der Thermosäulen 6a, 6b und der Heizung 5 liegen und mit diesen je einen thermischen Kontakt bilden. Die Anordnung gemäss Fig. 4 hat den Vorteil, dass der Halbleiterbaustein 1 mit dem Rohrstück 2 nur an wohldefinierten Stellen in thermischem Kontakt steht.

Der Halbleiterbaustein gemäss Fig. 4 kann wie jener gemäss Fig. 1 auch mit einer Klebemasse bedeckt werden.

Fig. 5 und 6 zeigen eine weitere Ausführung der Erfindung, wobei der Halbleiterbaustein 1 von einem Gehäuse 13 geschützt wird. Das Gehäuse 13 besteht vorzugsweise aus Kunststoff und besitzt z.B. eine geeignete Vertiefung zur Aufnahme des Halbleiterbausteins 1. Der Halbleiterbaustein 1 ist über Bonddrähte 18 mit einer gedruckten Schaltung 15 verbunden. Die gedruckte Schaltung 15 dient zur Montage von Anschlussdrähten 16 und ist mit dem Gehäuse 13 mechanisch verbunden, so dass an den Anschlussdrähten 16 angreifende Kräfte nicht direkt auf den Halbleiterbaustein 1 übertragen werden können.

Zum Abdecken des Halbleiterbausteins 1 und zum Befestigen des Gehäuses 13 am Rohr 2 ist wiederum ein Kleber 3 vorgesehen.

In den obigen Beispielen besitzt das Rohrstück 2 eine zylindrische Aussenfläche. Um eine möglichst gute Wärmeübertragung zwischen Halbleiterbaustein 1 und Rohrstück 2 zu erreichen, ist die Aussenfläche des Rohrstücks 2 im Bereich des Halbleiterbausteins 1 vorzugsweise jedoch abgeflacht ausgestaltet.

Zwei entsprechende Ausführungsbeispiele sind in Fig. 7 und 8 dargestellt.

Im Beispiel nach Fig. 7 ist das Rohrstück 2 zylindrisch, wurde aber in einem Bereich 17 abgeflacht.

In Fig. 8 ist das Rohrstück 2 im wesentlichen rechteckig und weist eine Vertiefung 19 auf, in welcher der Halbleiterbaustein 1 angeordnet wird. Im Bereich der Vertiefung 19 weist das Rohrstück 2 eine geringere Wandstärke auf als an den übrigen Wänden. Durch diese Anordnung ist der Halbleiterbaustein 1 besser geschützt und der Wärmewiderstand der Wandung des Rohrstücks 2 ist geringer. Mit anderen Worten weist das Rohrstück 2 also Wandbereiche unterschiedlicher Dicke auf, wobei der Halbleiterbaustein 1 an demjenigen Wandbereich angeordnet ist, der die geringste Dicke besitzt.

In den soweit dargstellten Ausführungsbeispielen ist das Rohr 2 einstückig dargestellt, d.h. der Querschnitt des Rohrs im Bereich des Sensors wird von einem Teil gebildet. Das Rohr 2 kann jedoch auch mehrstükkig aufgebaut sein, so dass die den Rohrquerschnitt bildenden Rohrwände aus mehreren Teilen gebildet sind.

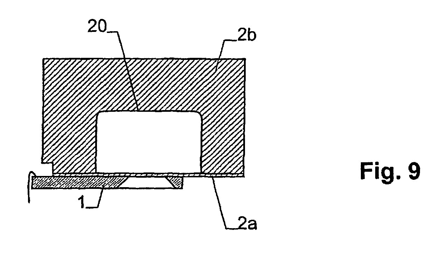

Ein entsprechendes Ausführungsbeispiel ist in Fig. 9 dargestellt. Hier wird das Rohr 2 von einem ersten Rohrteil 2a und einem zweiten Rohrteil 2b gebildet. Rohrteil 2b besteht aus einem Materialblock, in welchem eine Vertiefung bzw. Nut 20 angeordnet ist. Rohrteil 2a besitzt die Form einer dünnen Platte oder Folie und erstreckt sich über die Nut 20. Der Halbleiterbaustein 1 steht mit Rohrteil 2a in thermischen Kontakt und ist auf dessen Aussenseite angeordnet.

Bei dieser Ausführung bildet Rohrteil 2a also eine Wand des Rohrs 2 und trennt dessen Innenraum vom Halbleiterbaustein 1.

Die Ausführung nach Fig. 9 besitzt verschiedene Vorteile. Insbesondere kann Rohrteil 2a separat von Rohrteil 2b gefertigt werden. Dies erlaubt es, Rohrteil 2a als Platte oder Folie mit sehr gut definierter Dicke zu fertigen. Da Rohrteil 2a separat gefertigt wird, muss er selbsttragend sein.

Rohrteil 2a kann nach seiner Fertigung dichtend mit Rohrteil 2b verbunden werden, z.B. durch Kleben oder Schweissen. Der unabhängig von Rohrteil 2a gefertige Halbleiterbaustein 1 wird vor oder nach dem Verbinden der Rohrteile 2a und 2b am Rohrteil 2a befestigt.

Vorzugsweise besteht Rohrteil 2a aus einem Kunststoff, wie z.B. PEEK (Polyetheretherketon), Teflon Polyaryl-Sulfon (PSU) oder Polyimid. Seine Dicke ist gegeben durch die gewünschte Festigkeit und Wärmeleitfähigkeit. Damit er selbsttragend ist, sollte er jedoch eine Dicke von mindestens 10 µm, vorzugsweise mindestens 25 µm, aufweisen.

Ein weiterer Vorteil der Ausführung gemäss Fig. 9 liegt darin, dass das Rohrinnere bei der Herstellung zugänglich ist und somit in einfacher Weise ganz oder teilweise beschichtet werden kann, z.B. mit einer härtenden, anti-haftenden und/oder passivierenden Beschichtung, beispielsweise DLC (Diamond Like Carbon). Sowohl Rohteil 2a, als auch Rohrteil 2b können beschichtet sein.

Ein zusätzlicher Vorteil einer separaten Fertigung mehrerer Rohrteile 2a, 2b liegt darin, dass der Rohrteil 2a, der den Halbleiterbaustein 1 vom Innern des Rohrs trennt, im Hinblick auf einen gewünschten Messbereich bzw. ein gewünschtes Messmedium gezielt ausgewählt werden kann.

Ausserdem ermöglicht die Verwendung mehrerer Rohrteile den Einsatz unterschiedlicher Materialien, so dass z.B. Rohrteil 2a aus Kunststoff und Rohrteil 2b aus Metall sein kann.

Bei der Ausführung nach Fig. 9 heisst dies beispielsweise, dass verschiedene Platten bzw. Folien unterschiedlicher Dicke als Rohrteil 2a bereitgestellt werden. Abhängig vom Messbereich und/oder dem zu messenden Medium wird sodann die Dicke gewählt, die es erlaubt, die Dynamik des Halbleiterbausteins 1 voll auszunutzen bzw. den Messbereich anzupassen.

In den obigen Ausführungsbeispielen werden symmetrisch aufgebaute Sensoranordnungen mit zwei Temperatursensoren 6a, 6b verwendet. Es ist jedoch auch denkbar, nur einen Temperatursensor zu verwenden, wobei jedoch eine Anordnung mit zwei Temperatursensoren höhere Empfindlichkeit und Genauigkeit besitzt.

In der in Fig. 3 gezeigten Ausführung des Halbleiterbausteins 1 ist eine Öffnung 7 und eine Membran 8 vorgesehen, auf welcher sowohl die Heizung 5 als auch die inneren Kontakte der Thermosäulen 6a, 6b liegen. Eine alternative Ausführung ist in Fig. 10 dargestellt. Hier sind drei Öffnungen im Halbleiterbaustein 1 vorgesehen, von denen die mittlere unter der Heizung 5 und die äusseren unter den äusseren Kontaktreihen der Thermosäulen 6a, 6b liegen, und die jeweils von Membranen 8a, 8b und 8c überdeckt sind. Auch bei dieser Architektur ergibt sich eine gute thermische Isolation zwischen den Temperatursensoren und der Heizung.

Es ist auch denkbar, auf die Verwendung von Öffnungen und Membranen im Halbleiterbaustein zu verzichten und die Heizung sowie die Kontaktreihen der Thermoelemente über dem vollen Substrat anzuordnen. Dadurch wird die Empfindlichkeit des Bausteins zwar reduziert, die mechanische Stabilität jedoch erhöht.

Bei der Herstellung des Sensors werden separat voneinander der Halbleiterbaustein 1 und der Rohrabschnitt 2 bzw. die beiden Rohrteile 2a, 2b gefertigt. Sodann werden die Teile zusammengefügt. Bei der Ausführung nach Fig. 9 können dabei entweder zuerst die beiden Rohrteile 2a, 2b miteinander verbunden werden, oder es ist auch möglich, den Rohrteil 2a nach seiner Fertigung zuerst mit dem Halbleiterbaustein 1 zu verbinden, und erst dann den Halbleiterbaustein 1 mit dem ersten Rohrteil 2a am zweiten Rohrteil zu befestigen.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Flusssensor für eine Flüssigkeit mit einem Halbleiterbaustein (1), auf welchem mindestens ein Temperatursensor (6a, 6b) und eine Wärmequelle (5) integriert sind, **gekennzeichnet durch** ein Rohrstück (2) zum Führen der Flüssigkeit, wobei der Halbleiterbaustein (1) auf einer Aussenseite des Rohrstücks (2) angeordnet ist, und wobei der Temperatursensor (6a, 6b) und die Wärmequelle (5) mit der Aussenseite des Rohrstücks (2) in thermischem Kontakt stehen.

2. Flusssensor nach Anspruch 1, wobei der mindestens eine Temperatursensor (6a, 6b) und die Wärmequelle (5) in direktem Kontakt mit der Aussenseite des Rohrstücks (2) stehen.

3. Flusssensor nach Anspruch 1, wobei der mindestens eine Temperatursensor (6a, 6b) und die Wärmequelle über Wärmeleitelemente (12), insbesondere über metallische Wärmeleitelemente, mit der Aussenseite des Rohrstücks (2) in Kontakt stehen.

4. Flusssensor nach einem der Ansprüche 1 oder 3, wobei zwischen dem Halbleiterbaustein (1) und dem Rohrstück (2) eine adhäsive Schicht angeordnet ist.

5. Flusssensor nach Anspruch 4, wobei die adhäsive Schicht ein ausgehärtetes Lot ist.

6. Flusssensor nach einem der Ansprüche 1 oder 3, wobei zwischen dem Halbleiterbaustein (1) und dem Rohrstück (2) Wärmeleitpaste angeordnet ist.

7. Flusssensor nach einem der vorangehenden Ansprüche, wobei der Halbleiterbaustein (1) auf das Rohrstück (2) geklebt ist.

8. Flusssensor nach einem der vorangehenden Ansprüche, **dadurch gekennzeichnet, dass** das Rohrstück (2) aus Metall ist und/oder eine Wandstärke von höchstens 0.5 mm aufweist.

9. Flusssensor nach einem der vorangehenden Ansprüche, wobei im Halbleiterbaustein mindestens eine Vertiefung oder Öffnung (7) angeordnet ist, über der eine Membran (8; 8a, 8b) angeordnet ist, und dass der mindestens eine Temperatursensor (6a, 6b) und die Wärmequelle (5) auf der Membran (8; 8a, 8b) angeordnet sind.

10. Flusssensor nach einem der vorangehenden Ansprüche, wobei zwei Temperatursensoren (6a, 6b) auf dem Halbleiterbaustein (1) angeordnet sind und dass die Wärmequelle (5) zwischen den Temperatursensoren (6a, 6b) angeordnet ist, und/oder dass auf dem Halbleiterbaustein (1) eine Auswerteelektronik (10) für Signale des Temperatursensors bzw. der Temperatursensoren angeordnet ist.

11. Flusssensor nach einem der vorangehenden Ansprüche, wobei die Aussenseite des Rohrstücks (2) im Bereich (17) des Halbleiterbausteins (1) abgeflacht ist.

12. Flusssensor nach einem der vorangehenden Ansprüche, wobei das Rohrstück (2) an seiner Aussenseite eine Vertiefung (19) aufweist, in welcher der Halbleiterbaustein (1) angeordnet ist.

13. Flusssensor nach einem der vorangehenden Ansprüche, **dadurch gekennzeichnet, dass** das Rohrstück (2) einstückig ist.

14. Flusssensor nach einem der Ansprüche 1 - 12, wobei das Rohrstück (2) mehrstückig ist und mehrere Rohrteile (2a, 2b) aufweist, wobei der Halbleiterbaustein (1) mit einem ersten (2a) der Rohrteile in thermischen Kontakt steht.

15. Flusssensor nach Anspruch 14, wobei der erste Rohrteil (2a) die Form eine Platte oder Folie hat, und sich über eine Vertiefung (20) erstreckt.

16. Flusssensor nach Anspruch 15, wobei der erste Rohrteil (2a) selbsttragend ist und eine Dicke von mindestens 10 µm, vorzugsweise von mindestens 25 µm aufweist.

17. Flussssensor nach einem der Ansprüche 15 oder 16, wobei der erste Rohrteil aus einem Kunststoff ist.

18. Flussensor nach einem der vorangehenden Ansprüche, wobei das Rohrstück (2) Wandbereiche unterschiedlicher Dicke aufweist, wobei der Halbleiterbaustein am Wandbereiche geringster Dicke angeordnet ist.

19. Verfahren zum Herstellen eines Flusssensors, insbesondere nach einem der vorangehenden Ansprüche, **gekennzeichnet durch** die folgenden Schritte
Herstellen eines Halbleiterbausteins (1), auf welchem mindestens ein Temperatursensor (6a, 6b) und eine Wärmequelle (5) integriert sind,
Herstellen mindestens eines Rohrteils (2, 2a, 2b) zum Bilden eines Rohrstücks (2), und
Zusammenfügen des Halbleiterbausteins (1) und des mindestens eines Rohrteils (2, 2a, 2b) derart, dass der Halbleiterbaustein (1) mit einer Aussenseite des Rohrteils (2, 2a, 2b) in Kontakt steht.

20. Verfahren nach Anspruch 19, wobei der Rohrteil (2, 2a, 2b) separat vom Halbleiterbaustein gefertigt wird.

21. Verfahren nach einem der Ansprüche 19 oder 20, wobei das Rohrstück (2) mindestens aus einem ersten (2a) und einem zweiten (2b) Rohrteil zusammengefügt wird, wobei der Halbleiterbaustein (1) mit der Aussenseite des ersten Rohrteils (2a) verbunden wird, umfassend die folgenden Schritte
Bereitstellen mehrerer erster Rohrteile (2a) mit unterschiedlicher Dicke und
Auswahl eines der Rohrteile (2a) abhängig von einem gewünschten Messbereich und/oder einer gewünschten zu messenden Flüssigkeit.

## Claims

1. Flow sensor for a liquid with a semiconductor device (1) on which at least one temperature sensor (6a, 6b) and a heat source (5) are integrated, **characterized by** a tube section (2) for guiding the liquid, wherein the semiconductor device (1) is arranged at an exterior side the tube section (2) and wherein the temperature sensor (6a, 6b) and the heat source (5) are in thermal contact with the exterior side of the tube section (2).

2. Flow sensor according to claim 1, wherein the at least one temperature sensor (6a, 6b) and the heat source (5) are in direct contact with the exterior side of the tube section (2).

3. Flow sensor according to claim 1, wherein the at least one temperature sensor (6a, 6b) and the heat source are in contact with the exterior side of the tube section (2) via heat conducting elements (12), in particular via metallic heat conducting elements.

4. Flow sensor according to one of the claims 1 or 3, wherein an adhesive layer is arranged between the semiconductor device (1) and the tube section (2).

5. Flow sensor according to claim 4, wherein the adhesive layer is a hardened solder.

6. Flow sensor according to one of the claims 1 or 3, wherein thermally conductive paste is arranged between the semiconductor device (1) and the tube section (2).

7. Flow sensor according to one of the preceding claims, wherein the semiconductor device (1) is glued on to the tube section (2).

8. Flow sensor according to one of the preceding claims, **characterized in that** the tube section (8) is of a metal and/or has a wall thickness of at the most 0.5 mm.

9. Flow sensor according to one of the preceding claims wherein at least one recess or opening (7) is arranged in the semiconductor device, above of which a membrane (8; 8a, 8b) is arranged, and wherein the at least one temperature sensor (6a, 6b) and the heat source (5) are arranged on the membrane (8; 8a, 8b).

10. Flow sensor according to one of the preceding claims, wherein two temperature sensors (6a, 6b) are arranged on the semiconductor device (1) and wherein the heat source (5) is arranged between the temperature sensors (6a, 6b), and/or processing electronics (10) for signals from the temperature sensor or the temperature sensors, respectively, are arranged on the semiconductor device (1).

11. Flow sensor according to one of the preceding claims, wherein the exterior side of the tube section (2) is flattened in a region of the semiconductor device (1).

12. Flow sensor according to one of the preceding claims, wherein the tube section (2) comprises a recess (19) on its exterior side, in which recess the semiconductor device (1) is arranged.

13. Flow sensor according to one of the preceding claims, **characterized in that** the tube section (2) is of a single piece.

14. Flow sensor to one of the claims 1 - 12, wherein the tube section (2) is a multipart structure and consists of several tube parts (2a, 2b), wherein the semiconductor device (1) is in thermal contact with a first one (2a) of the tube parts.

15. Flow sensor according to claim 14, wherein the first tube part (2a) has the shape of a plate or foil and extends over a recess (20).

16. Flow sensor according to claim 15, wherein the first tube section (2a) is self-supporting and has a thickness of at least 10 µm, preferably of at least 25 µm.

17. Flow sensor according to one of the claims 15 or 16, wherein the first tube section is of a plastic material.

18. Flow sensor according to one of the preceding claims, wherein the tube section (2) comprises wall regions of differing thickness, wherein the semiconductor device is arranged at a wall region of the least thickness.

19. Method for producing a flow sensor, in particular according to one of the preceding claims, comprising the steps of
producing a semiconductor device (1) onto which at least one temperature sensor (6a, 6b) and a heat source (5) are integrated,
producing at least one tube part (2, 2a, 2b) for forming a tube section (2), and
assembling the semiconductor device (1) and the at least one tube part (2, 2a, 2b) so that the semiconductor device (1) is in contact with an exterior side of the tube part (2, 2a, 2b).

20. Method according to claim 19, wherein the tube part (2, 2a, 2b) is produced separately from the semiconductor device.

21. Method according to one of the claims 19 or 20, wherein the tube section (2) is assembled from at least a first (2a) and a second (2b) tube part, wherein the semiconductor device (1) is connected to the exterior side of the first tube section (2a), comprising the following steps
providing several first tube parts (2a) with differing thickness, and
selecting one of the tube parts (2a) depending on a desired measurement range and/or on a desired liquid to be measured.

## Revendications

1. Détecteur de débit pour un fluide avec un module à semi-conducteurs (1), sur lequel est intégré au moins un capteur de température (6a,6b) et une source de chaleur (5), **caractérisé par** un élément tubulaire (2) pour le guidage du liquide, dans lequel le module à semi-conducteurs (1) est disposé sur le côté extérieur de l'élément tubulaire (2), et dans lequel le capteur de température (6a,6b) et la source de chaleur (5) sont en contact thermique avec le côté extérieur de l'élément tubulaire (2).

2. Détecteur de débit selon la revendication 1, dans lequel le au moins un capteur de température (6a, 6b) et la source de chaleur (5) sont en contact direct avec le côté extérieur de l'élément tubulaire (2).

3. Détecteur de débit selon la revendication 1, dans lequel le au moins un capteur de température (6a, 6b) et la source de chaleur sont en contact par le biais d'éléments conducteurs de chaleur (12), en particulier par le biais d'éléments conducteurs de chaleur métalliques, avec le côté extérieur de l'élément tubulaire (2).

4. Détecteur de débit selon l'une des revendications 1 ou 3, dans lequel une couche adhésive est disposée entre le module à semi-conducteurs (1) et l'élément tubulaire (2).

5. Détecteur de débit selon la revendication 4, dans lequel la couche adhésive est un métal d'apport de brasage durci.

6. Détecteur de débit selon l'une des revendications 1 ou 3, dans lequel entre le module à semi-conducteurs (1) et l'élément tubulaire (2) est disposée une pâte conductrice de chaleur.

7. Détecteur de débit selon l'une des revendications précédentes, dans lequel le module à semi-conducteurs (1) est collé sur l'élément tubulaire (2).

8. Détecteur de débit selon l'une des revendications précédentes, **caractérisé en ce que** l'élément tubulaire (2) est en métal et/ou présente une épaisseur de paroi de 0,5 mm maximum.

9. Détecteur de débit selon l'une des revendications précédentes, dans lequel est agencée au moins une dépression ou ouverture (7) dans le module à semi-conducteurs, sur laquelle est disposée une membrane (8 ;8a, 8b), et en ce que le au moins un capteur de température (6a,6b) et la source de chaleur (5) sont disposés sur la membrane (8 ;8a,8b).

10. Détecteur de débit selon l'une des revendications précédentes, dans lequel deux capteurs de température (6a,6b) sont disposés sur le module à semi-conducteurs (1) et en ce que la source de chaleur (5) est agencée entre les capteurs de température (6a,6b), et/ou en ce que sur le module à semi-conducteurs (1) est disposé une électronique d'évaluation (10) pour les signaux du capteur de température ou des capteurs de température.

11. Détecteur de débit selon l'une des revendications précédentes, dans lequel le côté extérieur de l'élément tubulaire (2) est aplati au niveau (17) du module à semi-conducteurs (1).

12. Détecteur de débit selon l'une des revendications précédentes, dans lequel l'élément tubulaire (2) présente une dépression (19) sur son côté extérieur, dans laquelle est disposé le module à semi-conducteurs (11).

13. Détecteur de débit selon l'une des revendications précédentes, **caractérisé en ce que** l'élément tubulaire (2) est d'un seul tenant.

14. Détecteur de débit selon l'une des revendications précédentes 1-12, dans lequel l'élément tubulaire (2) est composé de plusieurs pièces tubulaires (2a,2b), dans lequel le module à semi-conducteurs (1) est en contact thermique avec une première (2a) des pièces tubulaires.

15. Détecteur de débit selon la revendication 14, dans lequel la première pièce tubulaire (2a) a la forme d'une plaque ou d'une feuille, et s'étend sur une dépression (20).

16. Détecteur de débit selon la revendication 15, dans lequel la première pièce tubulaire (2a) est autoportante et présente une épaisseur d'au moins 10 µm, de préférence d'au moins 25 µm.

17. Détecteur de débit selon l'une des revendications 15 ou 16, dans lequel la première pièce tubulaire est en matière synthétique.

18. Détecteur de débit selon l'une des revendications précédentes, dans lequel l'élément tubulaire (2) présente des zones de paroi de différentes épaisseurs, dans lequel le module à semi-conducteurs est agencé sur la zone de paroi de la plus faible épaisseur.

19. Procédé pour la réalisation d'un détecteur de débit selon l'une des revendications précédentes, **caractérisé par** les étapes suivantes :
réalisation d'un module à semi-conducteurs (1), sur lequel sont intégrés un capteur de température (6a,6b) et une source de chaleur (5),
réalisation d'au moins une pièce tubulaire (2,2a,2b) pour la formation d'un élément tubulaire (2), et
assemblage du module à semi-conducteur (1) et de la au moins une pièce tubulaire (2,2a,2b) de telle sorte que le module à semi-conducteurs (1) est en contact avec un côté extérieur de la pièce tubulaire (2,2a,2b).

20. Procédé selon la revendication 19, dans lequel la pièce tubulaire (2,2a,2b) est fabriquée de façon séparée du module à semi-conducteur.

21. Procédé selon l'une des revendications 19 ou 20, dans lequel l'élément tubulaire (2) est assemblé au moins à partir d'une première (2a) et d'une seconde (2b) pièce tubulaire, dans lequel le module à semi-conducteurs (1) est raccordé avec le côté extérieur de la première pièce tubulaire (2a), englobant les étapes suivantes :
mise à disposition de plusieurs premières pièces tubulaires (2a) de différentes épaisseurs et
sélection de l'une des pièces tubulaires (2a) en fonction d'une zone de mesure souhaitée et/ou d'un liquide souhaité à mesurer.
